# EUROPÄISCHE PATENTSCHRIFT

(11) **EP 2 802 510 B1**
(45) Veröffentlichungstag und Bekanntmachung des Hinweises auf die Patenterteilung: **28.09.2016**
(21) Anmeldenummer: 12813250.3
(22) Anmeldetag: 12.11.2012
(51) Int. Cl.: B63H 21/20, B63H 23/12

(54) **STEUERVERFAHREN EINES HYBRIDEN SCHIFFSANTRIEBES UND HYBRIDE ANTRIEBSANLAGE**
CONTROL METHOD FOR A HYBRID VESSEL DRIVE MEANS AND HYBRID DRIVE SYSTEM
PROCÉDÉ DE COMMANDE D'UNE PROPULSION DE BATEAU HYBRIDE ET SYSTÈME DE PROPULSION HYBRIDE ASSOCIÉ

(30) Priorität: 14.11.2011 DE 102011086291
(43) Veröffentlichungstag der Anmeldung: 19.11.2014
(73) Patentinhaber: Steyr Motors GmbH, 4407 Steyr (AT)
(72) Erfinder: ASCHABER, Michael, A-4421 Aschach (AT)
(74) Vertreter: Kovac, Werner
(86) Internationale Anmeldenummer: PCT/AT2012/000287
(87) Internationale Veröffentlichungsnummer: WO 2013/071320

(56) Entgegenhaltungen:
- WO-A1-2010/115479
- AT-U1- 8 288
- US-B1- 8 043 132

## Beschreibung

Die Erfindung betrifft ein Verfahren zum Steuern der hybriden Antriebsanlage eines Wasserfahrzeuges, welche Anlage aus einer Verbrennungskraftmaschine, mindestens einer elektrischen Maschine für den motorischen und für den generatorischen Betrieb, einem Antriebsstrang mit einer Schiffsschraube, einem Stromspeicher und einer Steuereinheit besteht, wobei zwischen der Verbrennungskraftmaschine und der mindestens einen elektrischen Maschine eine Kupplung vorgesehen ist.

Die Erfindung betrifft auch eine hybride Antriebsanlage eines Wasserfahrzeuges.

Hybride Schiffsantriebe finden in kleinen Motorbooten, Yachten und auch in größeren Schiffen Einsatz. Aus der Praxis bekannt sind Antriebsanlagen, die aus einer Einheit bestehen, in der die Verbrennungskraftmaschine mit einer elektrischen Maschine, die oft generatorisch und motorisch betreibbar ist, zusammengefasst ist. Es können aber auch mehrere elektrische Maschinen sein, die entweder als Motor oder als Generator ausgeführt sind. Die elektrische Maschine ist zwischen der Verbrennungskraftmaschine und dem Antriebsstrang angeordnet. Die Kupplung erlaubt die Verbindung der Verbrennungskraftmaschine mit der elektrischen Maschine und somit einen Antrieb durch die Verbrennungskraftmaschine und die elektrische Maschine gemeinsam. Eine weitere Kupplung kann zwischen der elektrischen Maschine und dem Antriebsstrang vorgesehen sein.

### Stand der Technik

Allgemein besteht bei Schiffsantrieben mit einer Verbrennungskraftmaschine das Problem, die Lastkennlinie des Antriebsstranges und das Kennfeld der Verbrennungskraftmaschine in Einklang zu bringen. Die Lastkennlinie ist im Wesentlichen die Kennlinie der Schiffsschraube (im Folgenden Propellerkennlinie), die schlecht in das Kennfeld einer Verbrennungskraftmaschine passt. Sie verläuft durchwegs in Gebieten des Kennfeldes mit höherem bis hohem spezifischen Verbrauch. Dadurch ist ein optimaler, effizienter Betrieb der Schiffsschraube nur bedingt oder gar nicht möglich. Meist wird bei der Auswahl des Verbrennungsmotors und der Dimensionierung der Schiffsschraube nur die maximale Geschwindigkeit des Wasserfahrzeuges berücksichtigt.

Eine derartige Anlage ist in der WO 2010/115479 A1 beschrieben. In dieser Schrift ist allgemein ausgeführt, dass rein elektrisch langsam gefahren werden kann, und dass bei durch den Propellerantrieb nicht ausgelasteter Verbrennungskraftmaschine mit dem überschüssigen Moment über die elektrische Maschine die Batterie geladen werden kann. Dazu heißt es weiters, dass das vor allem bei Fahrt mit geringem Leistungsbedarf vorteilhaft ist, weil dadurch der Betriebspunkt der Verbrennungskraftmaschine zum Verbrauchsminimum hin verschoben wird. Ein solcher Betriebspunkt ist jedoch vom Verbrauchsminimum so weit entfernt, dass die elektrische Maschine erheblich überdimensioniert sein müsste. Das ist nicht nur wegen ihres Raumbedarfes nachteilig, die elektrische Maschine würde im Ladebetrieb einen für den Stromspeicher viel zu hohen und daher schädlichen Ladestrom liefern. Sie wäre sie auch für den motorischen Betrieb überdimensioniert.

Weiters ist in dieser Schrift zu lesen, dass, wenn bei mittlerer bis hoher Geschwindigkeit des Schiffes die Verbrennungskraftmaschine bei relativ hohen Lasten betrieben wird, der Betriebspunkt der Verbrennungskraftmaschine im Verbrauchskennfeld in dem oder nahe dem Bereich minimalen Verbrauches liegt. Da über die Auslegung der Schiffsschraube nichts gesagt ist, ist sie wohl konventionell und der Betriebspunkt bestenfalls etwas näher dem Bereich minimalen Verbrauches, aber nicht in ihm.

Bei konventioneller Auslegung der Schiffsschraube schneidet ihre Kennlinie die Volllasthyperbel im Nennleistungspunkt. Verläuft sie darunter, überdreht der Motor. Verläuft sie darüber, wird die mit der Motorleistung erzielbare Geschwindigkeit des Bootes nicht erreicht, weil die Schiffsschraube bei gleichem Antriebsmoment nur eine niederere Drehzahl erreicht. Die konventionelle Auslegung wird somit die optimale angesehen und ist deshalb die allgemein übliche.

Nicht bedacht ist, dass die meisten Boote bei weitem nicht nur im Nennleistungspunkt des Antriebsmotors betrieben werden und dass der Gesamtwirkungsgrad der Anlage über alle Betriebszustände (das heißt über ein realistisches Lastkollektiv) auch von dem Wirkungsgrad abhängt, mit dem der elektrische Strom erzeugt wird.

### Problem/Lösung/Verfahren

Ausgehend von diesem Stand der Technik ist es daher Aufgabe der Erfindung, den Treibstoffverbrauch und auch die Emissionen eines gattungsgemäßen Antriebes für alle Betriebszustände zu minimieren, und wenn möglich auch die Lebensdauer der Verbrennungskraftmaschine zu erhöhen. Erfindungsgemäß wird das mit einem Verfahren gemäß Anspruch 1 erreicht.

Dadurch, dass bei der Fahrt im oberen Leistungsbereich durch Ansteuern des Generators die gemeinsame Leistungsaufnahme der Schiffsschraube und des Generators der Betriebspunkt der Verbrennungskraftmaschine so eingestellt wird dass er im Kennfeld der Verbrennungskraftmaschine in dem der jeweiligen Drehzahl entsprechenden Punkt minimalen spezifischen Verbrauches liegt, läuft die Verbrennungskraftmaschine in einem weiten Bereich mit maximalem Wirkungsgrad (das heißt mit minimalem spezifischen Kraftstoffverbrauch), somit ist der mit maximalem Wirkungsgrad erzeugte Strom "billig".

Der so erzeugte billige Strom steht für den elektromotorischen Betrieb in weiteren Leistungsbereichen zur Verfügung, wodurch die Verbrennungskraftmaschine unterstützt beziehungsweise ersetzt werden kann, und so auch in diesen Bereichen indirekt eine Kraftstoffersparnis erreicht wird. Damit können auch noch weitere Vorteile erzielt werden. Im unteren Leistungsbereich ist der spezifische Kraftstoffverbrauch einer Verbrennungskraftmaschine besonders hoch, sodass in diesem Bereich rein elektrisch gefahren wird, wobei wieder der mit höchstem Wirkungsgrad erzeugte Strom zu buche schlägt. Daher ist es wirtschaftlich, wenn die elektrische Maschine die Verbrennungskraftmaschine in einem weiten unteren Leistungsbereich unterstützt.

Diese Unterstützung ist auch bei der Fahrt im mittleren Leistungsbereich in zwei Betriebszuständen hilfreich (siehe zur Auslegung der Anlage): Erstens, wenn die Verbrennungskraftmaschine mit einem Turbolader ausgestattet ist, zur Überbrückung des "Turboloches" durch verzögertes Ansprechen des Turboladers. Das Leistungskennfeld einer solchen Verbrennungskraftmaschine zeigt meist im mittleren Bereich eine Einbuchtung, in der der Abstand zur Propellerkennline klein ist. Dadurch steht in diesem Bereich nur wenig Leistungs- beziehungsweise Momentenreserve zum Beschleunigen zur Verfügung. Man spricht von geringer Agilität. Hier schafft Unterstützung durch die elektrische Maschine Abhilfe.

Zweitens bei einem Gleitboot beim Übergang von Verdrängungsfahrt auf Gleitfahrt. Dabei ist zunächst bei Verdrängungsfahrt zum Beschleunigen gegen den hohen Fahrwiderstand die Unterstützung durch die elektrische Maschine hilfreich und ist dann, wenn sich das Boot zur Gleitfahrt aus dem Wasser gehoben hat, der Fahrtwiderstand und daher der Momentenbedarf erheblich geringer.

Die Unterstützung durch die elektrische Maschine kann sogar zur Erhöhung der Geschwindigkeit des Bootes über die mit der Verbrennungskraftmaschine alleine nicht erreichbare Geschwindigkeit hinaus genutzt werden ("Boost"). Dadurch wird die durch die ebenfalls erfindungsgemäße Auslegung der Schiffsschraube (siehe weiter unten) verminderte Höchstgeschwindigkeit bei Antrieb nur durch die Verbrennungskraftmaschine kompensiert.

In vorteilhafter Ausgestaltung des Verfahrens ist in der Steuereinheit die Kennlinie des Antriebsstranges (das ist im Wesentlichen die Propellerkennlinie, unter Berücksichtigung eines eventuell vorhandenen Untersetzungsgetriebes) und das Kennfeld der Verbrennungskraftmaschine (dargestellt in einem Drehmoment/Drehzahl - Diagramm, oder auch in einem Leistungs/Drehzahl - Diagramm, das auch die dem spezifischen Kraftstoffverbrauch entsprechenden sogenannten "Muschelkurven" enthält) gespeichert und erfolgt die Einstellung der gemeinsamen Momenten - beziehungsweise Leistungsaufnahme auf den jeweiligen Punkt minimalen spezifischen Kraftstoffverbrauchs durch Einstellen des von der elektrischen Maschine aufgenommenen Drehmomentes beziehungsweise der Leistung. Es wird also bei der jeweiligen Drehzahl der Betriebspunkt der Verbrennungskraftmaschine angehoben bis in deren Kennfeld der Betriebspunkt geringsten spezifischen Kraftstoffverbrauches erreicht ist.

In Weiterbildung des Verfahrens wird die von der elektrischen Maschine aufgenommene Leistung beziehungsweise das aufgenommene Drehmoment beschränkt. Das kann auf verschiedene Weise geschehen: Durch in der Steuereinheit gespeicherte Grenzwerte oder durch Auslegung des Antriebsstranges, insbesondere der Schiffsschraube, wie weiter unten erläutert.

Das vorgeschlagene Verfahren ergibt insgesamt über ein in der Praxis auftretendes Lastkollektiv einen ganz erheblich abgesenkten spezifischen Kraftstoffverbrauch (um bis zu 40 %) und folglich auch weniger Emissionen. Der minimale spezifische Kraftstoffverbrauch ist ja die Folge einer vollständigen Verbrennung, bei der auch weniger Schadstoffe (CO, unverbrannte Kohlenwasserstoffe, Ruß) entstehen. Dieser Erfolg ist insoferne überraschend, als es zunächst absurd erscheint, den Kraftstoffverbrauch einer Verbrennungskraftmaschine durch deren zusätzliche Belastung zu senken.

### Lösung/Anlage

Die Erfindung handelt auch von einer Antriebsanlage eines gattungsgemäßen Wasserfahrzeuges, deren Auslegung das erfindungsgemäße Verfahren unterstützt beziehungsweise vollendet. Der Antriebsstrang ist so ausgelegt, dass seine Kennlinie um eine definierte maximale Ladeleistung unter dem Punkt minimalen spezifischen Brennstoffverbrauches bei der jeweiligen Drehzahl liegt. Die Ladeleistung ist durch die generatorisch arbeitende elektrische Maschine bestimmt und durch den Stromspeicher begrenzt. Die Kennlinie eines erfindungsgemäß ausgelegten Antriebsstranges ist den Betriebspunkten geringsten spezifischen Verbrauchers bereits näher als die eines konventionell ausgelegten Antriebsstranges, erbringt also bereits eine Verbesserung des Wirkungsgrades. Der Betriebspunkt minimalen Verbrauches wird dann durch das erfindungsgemäße Verfahren (Ansteuerung der als Generator arbeitenden elektrischen Maschine) erreicht.

Bei Auslegung der Schiffsschraube nach dem Stand der Technik hingegen verläuft die Propellerkennlinie sehr weit unter dem Bereich geringsten spezifischen Verbrauches der Verbrennungskraftmaschine. Um von der Propellerkennlinie zu dem jeweiligen Punkt geringsten spezifischen Verbrauches zu gelangen, müsste der Generator ein sehr hohes Drehmoment beziehungsweise eine hohe Leistung aufnehmen. Das aber würde eine sehr große und Leistungsstarke elektrische Maschine erfordern. Eine solche ist nicht nur wegen ihres Raumbedarfes nachteilig, sie würde im Ladebetrieb auch einen für den Stromspeicher viel zu hohen und daher schädlichen Ladestrom liefern.

Vorzugsweise wird die erfindungsgemäße Auslegung der Kennlinie des Antrebsstranges dadurch erreicht, dass die Propellerkennlinie im Kennfeld steiler als eine zum Nennleistungspunkt führend Kennlinie verläuft. So liegt sie den Punkten geringsten spezifischen Verbrauches der Verbrennungskraftmaschine bereits näher. Sie schneidet die Volllastkurve der Verbrennungskraftmaschine in einem Punkt, der im Schnittpunkt der Volllastkurve mit der Nennleistungshyperbel oder bei etwas tieferen Drehzahlen liegt. Wenn sie im Schnittpunkt liegt, ist die Leistungsaufnahme des Antriebsstranges gleich der Leistung im Nennleistungspunkt (aber mit höherem Drehmoment bei kleinerer Drehzahl). Vergleich mit dem Stand der Technik, in dem der Nennleistungspunkt der Auslegung zugrunde liegt, zeigt, dass bei gleicher Verbrennungskraftmaschine bei erfindungsgemäßer Auslegung nur eine kleinere Drehzahl erreicht wird. Das erscheint zunächst nachteilig. Ist es aber nur, wenn die meiste Zeit mit maximaler Geschwindigkeit gefahren wird, was nicht der Fall ist. Wenn kurzzeitig maximale Geschwindigkeit erforderlich ist, kann gemäß dem erfindungsgemäßen Verfahren die elektrische Maschine helfen (man spricht von "boost"), auch wieder mit dem "billigen" Strom aus dem Stromspeicher.

Die erfindungsgemäße Kennlinie des Antriebsstranges ist großteils durch Auslegung beziehungsweise Gestaltung der Schiffsschraube bestimmt. So kann beispielsweise ihr Durchmesser größer als der einer Schiffsschraube herkömmlicher Auslegung sein, oder die Steigung ihrer Blätter. Eine Vergrößerung des Durchmessers ergibt eine besseren Wirkungsgrad der Schiffsschraube (gemäß dem Cordier - Diagramm, siehe Otto Cordier, "Ähnlichkeitsbedingungen für Strömungsmaschinen", BWK Zeitschrift Nr. 10/1953, Seiten 337-340), und somit eine weitere Reduktion des Treibstoffverbrauches.

In optimaler Auslegung liegt das Leistungsverhältnis der motorisch betriebenen elektrischen Maschine zur Leistung der Verbrennungskraftmaschine bei 1 : 3 bis 1 : 8, vorzugsweise bei 1 : 4 bis 1:5. Die elektrische Maschine ist so zwar stärker als üblich, aber dank der Erfindung wird damit bereits in einem weiten Bereich der jeweilige Punkt geringsten spezifischen Verbrauches der Verbrennungskraftmaschine erreicht. Dadurch dass der Stromspeicher auch im oberen Leistungsbereich geladen wird, ist er die meiste Zeit voll geladen, was einen stärkeren Elektromotor oder dessen längeren Betrieb ermöglicht.

In einer weiteren vorteilhaften Ausgestaltung und Auslegung weist die motorisch betriebene elektrische Maschine im unteren Drehzahlbereich des Antriebsstranges ein möglichst hohes Drehmoment auf, das erst bei möglichst hoher Drehzahl das Antriebsmoment des Antriebsstranges erreicht. Dadurch steht im unteren Leistungsbereich (bei Fahrt ganz ohne Verbrennungskraftmaschine) und in dem darüber liegenden Leistungsbereich, in dem die Verbrennungskraftmaschine zum Beschleunigen Unterstützung braucht, genug Drehmoment zur Verfügung und reicht dieser Bereich näher an den mittleren Leistungsbereich.

Bei beschränkten Raumverhältnissen oder wenn der Bereich, in dem die elektrische Maschine ein hohes Drehmoment bereitstellt möglichst weit sein soll, besteht eine Weiterentwicklung darin, das hohe Drehmoment der motorisch betriebenen elektrischen Maschine über einen weiten Bereich durch ein mit dieser zusammenwirkendes Untersetzungsgetriebe zu erreichen (Anspruch 8). Deren Drehmoment ist dann das Ausgangsmoment des Untersetzungsgetriebes.

### Figuren

Im folgenden wird die Erfindung anhand von Abbildungen beschrieben und erläutert. Es stellen dar:
- Fig. 1:: Das Schema einer Antriebsanlage nach dem Stand der Technik und auch bei einer erfindungsgemäßen Anlage,
- Fig. 2:: Eine Variante zu Fig. 1,
- Fig. 3:: Das Kennfeld einer Antriebsanlage nach dem Stand der Technik,
- Fig. 4:: Das Kennfeld der Fig. 3, erweitert um eine Propellerkennlinie, gemäß der Erfindung,
- Fig. 5:: Das komplette Kennfeld einer erfindungsgemäßen Antriebsanlage.

### Beschreibung

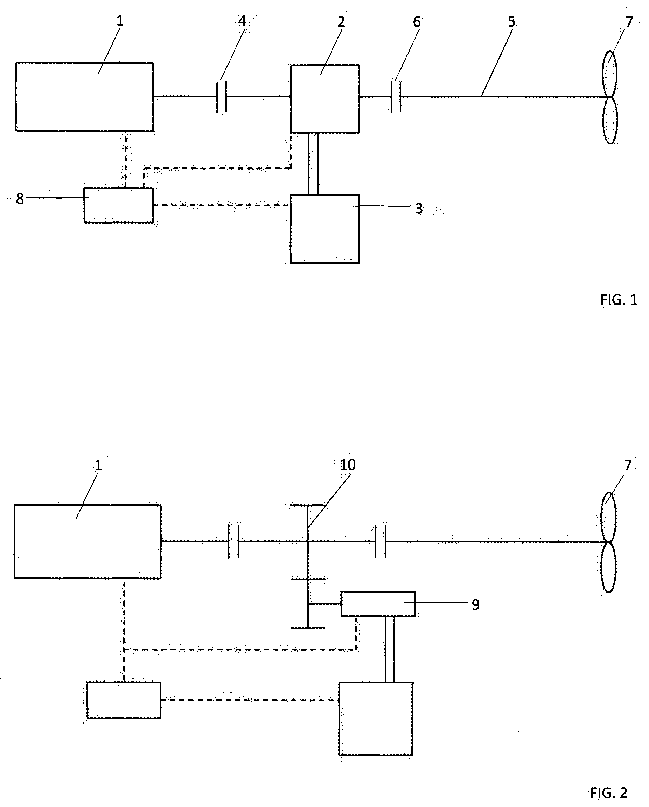

In **Fig. 1** ist eine Verbrennungskraftmaschine mit 1, eine elektrische Maschine mit 2 und ein Stromspeicher mit 3 bezeichnet. Die elektrische Maschine 2 ist entweder für den motorischen und für den generatorischen Betrieb geeignet oder es sind zwei elektrische Maschinen vorhanden, ein Motor und ein Generator. Zwischen der Verbrennungskraftmaschine 1 und der elektrischen Maschine 2 ist eine erste Trennkupplung 4 und zwischen der elektrischen Maschine 2 und einem Antriebsstrang 5 ist eine zweite Trennkupplung 6 angeordnet. Am äußeren Ende des Antriebsstranges 5 ist eine Schiffsschraube 7 angebracht. Eine Steuereinheit 8 steuert die Verbrennungskraftmaschine 1, die elektrische Maschine 2 und das Laden des Stromspeichers 3.

**Fig. 2** ist eine Variante, die sich von der Fig. 1 dadurch unterscheidet, dass eine hochtourige elektrische Maschine 9 über ein Untersetzungsgetriebe 10 mit dem Antriebsstrang antriebsverbunden ist. Die elektrische Maschine 9 kann auch nur für den motorischen Betrieb eingerichtet und der Generator anders angeordnet sein. Der hochtourige Motor 9 und das Untersetzungsgetriebeermöglichen es, über einen weiten Drehzahlbereich ein hohes Drehmoment zur Verfügung zu stellen und rein elektrisch zu fahren, bei stillgesetzter und entkuppelter Verbrennungskraftmaschine.

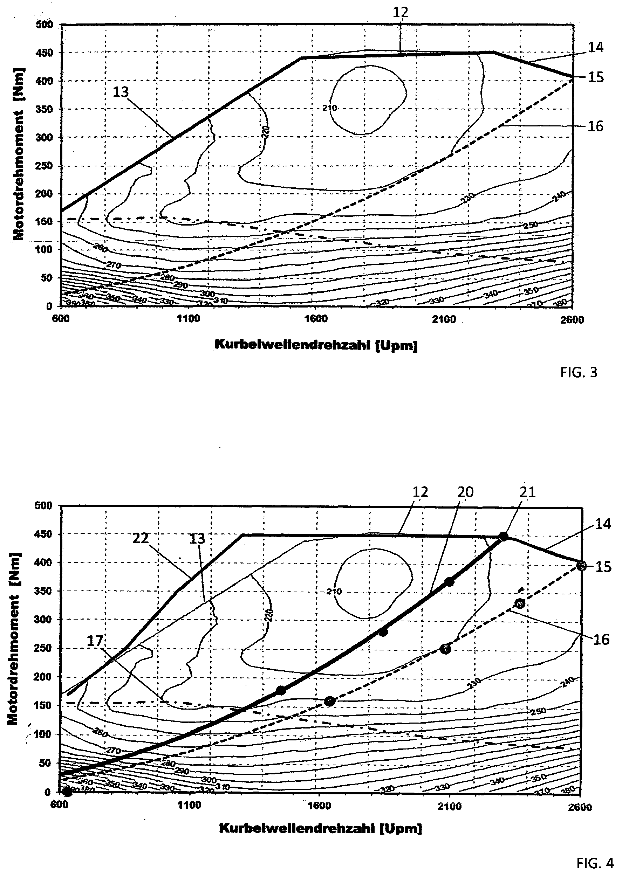

In **Fig. 3** ist das Kennfeld einer Verbrennungskraftmaschine, hier eines Dieselmotors 1, abgebildet. Das eines Ottomotors ist ähnlich, wenn auch die Kurven in Detail anders verlaufen. Auf der Abszisse ist dessen Drehzahl (die, siehe Fig. 1 gleich der Drehzahl der elektrischen Maschine 2 und des Antriebsstranges 5 ist) aufgetragen, auf der Ordinate das Drehmoment. Das Motorkennfeld ist oben durch die Vollastkurve 12 begrenzt, die bei niederer Drehzahl absinkt (13) und bei hoher Drehzahl in die der maximalen Leistung entsprechende Nennleistungshyperbel 14 übergeht. In dem Kennfeld sind in der Art der Höhenschichtlinien einer Landkarte Kurven gleichen spezifischen Kraftstoffverbrauches (der z.B. in Gramm pro PS und Stunde angegeben wird) eingezeichnet. Man nennt sie auch Muschelkurven. Es ist zu erkennen, dass dieser in der Mitte des von der mit "210" bezeichneten Kurve umgebenen Gebietes ein Minimum ist. Auch bei anderen Drehzahlen gibt es ein Minimum. Dort hat der Wirkungsgrad der Verbrennungskraftmaschine ein Maximum.

Weiters ist als Kennlinie des Antriebsstranges eine Propellerkennlinie 16 nach dem Stand der Technik strichliert eingezeichnet, die im Nennleistungspunkt 15 des Verbrennungsmotors auf der Nennleistungshyperbel 14 endet. Man erkennt, dass im Betrieb mit nur der Verbrennungskraftmaschine (alle Betriebspunkte liegen auf der Propellerkennlinie) die Propellerkennlinie großteils in Bereichen hohen spezifischen Verbrauches (schlechter Wirkungsgrade) verläuft. Besonders ungünstig ist der Bereich langsamer Fahrt oder Leerlauf, in dem viele Bootsmotoren den größten Teil ihrer Laufzeit betrieben werden. Daher ist es erwünscht, in einem möglichst weiten Bereich rein elektrisch zu fahren.

In **Fig. 4** ist die Volllastkurve 17 eines Elektromotors/Generators im Kennfeld eingetragen. Mit Hilfe dieses Elektromotors/Generators wird dank der Erfindung der Wirkungsgrad der gesamten Antriebsanlage über den gesamten Betriebsbereich erhöht. Der Elektromotor kann zusätzlich zur Verbrennungskraftmaschine den Antriebsstrang antreiben (man spricht deshalb von "parallelhybrid"), siehe Fig.1 beziehungsweise Fig.2. Wichtig ist, dass der Elektromotor im unteren Drehzahlbereich ein hohes Drehmoment aufweist, und nach dem Leistungsmaximum die Leistung konstant über die Drehzahl hält. Dadurch wird der mit reinem Elektrobetrieb mögliche Bereich besonders groß und die Verbrennungskraftmaschine braucht in ihrem Bereich hohen spezifischen Kraftstoffverbrauches überhaupt nicht betrieben zu werden. Das ist bereits eine Maßnahme zur Reduktion des Treibstoffverbrauches. Es folgen weitere Maßnahmen.

Eine ganz wichtige Maßnahme besteht erfindungsgemäß darin, die Betriebsdrehzahl der Verbrennungskraftmaschine zu drücken, mit anderen Worten: ein bestimmtes Drehmoment bei einer tieferen Drehzahl zu erreichen. Damit wird für das spätere Laden der Stromspeicher in einem möglichst großen Bereich ein maximaler Wirkungsgrad des Verbrennungsmotors erreicht. Das Drücken der Betriebsdrehzahl der Verbrennungskraftmaschine wird in einem Aspekt der Erfindung durch die Verwendung einer entsprechend ausgebildeten Schiffsschraube 7 (z.B: größerer Durchmesser) erreicht, wodurch der Punkt höchster Drehmomentes 21 im Kennfeld auf niedrigere Drehzahlen (von 2600 auf 2300 rpm) gedrückt wird. Die entsprechend ausgebildete Schiffsschraube 7 kann einen größeren Durchmesser haben (was gemäß dem Cordier - Diagramm) nebstbei seine Verluste vermindert) oder Blätter mit höherer Steigung, oder andere konstruktive Maßnahmen.

**Fig. 4** zeigt die entsprechend modifizierte erfindungsgemäße Kennlinie 20 des Antriebsstranges (das ist im Wesentlichen die Propellerkennlinie), sie schneidet die Volllastkurve im Punkt 21, der bei niederer Drehzahl liegt als der Punkt 15 einer Auslegung nach dem Stand der Technik. Dadurch liegen die Betriebspunkte den Punkten geringsten spezifischen Verbrauches bereits näher. Wichtig für die weiter unten zu beschreibende Energieerzeugung ist, dass die Propellerkennlinie leicht unterhalb oder im Bereiche besten Wirkungsgrades zu liegen kommt.

Durch Drücken der Nennleistungsdrehzahl gemäß Propellerkennlinie 20 rückt diese im unteren Drehzahlbereich aber näher an den abfallenden Ast 13 der Volllastkurve. Das hat zur Folge, dass die Agilität bei Beschleunigungsvorgängen verschlechtert wird. Bei Motoren mit ausgeprägtem Turboloch kann es dazu führen, dass der Motor die Nennleistungsdrehzahl nicht mehr erreicht, da er das Wasserfahrzeug im Turboloch nicht mehr beschleunigen kann. Durch das zusätzliche Drehmoment des Elektromotors wird die Verbrennungskraftmaschine unterstützt und somit die ursprüngliche Agilität bei der Propellerkennline 16 wieder erreicht. Die Volllastkurve 22 bei gemeinsamem Betrieb mit Elektro- und Verbrennungsmotor ist in Fig. 4 dargestellt, wobei nur ein Teil des Elektromotordrehmoments addiert ist

Für die Wirtschaftlichkeit des elektrischen Betriebes ist wesentlich, mit welchem Wirkungsgrad der elektrische Strom gewonnen wird. Erfindungsgemäß wird er in Betriebspunkten mit jeweils minimalem spezifischen Kraftstoffverbrauch erzeugt. Diese Vorgangsweise verbessert den Wirkungsgrad im Leerlaufbetrieb (bei Antrieb mit dem so erzeugten Strom) um bis zu 40 Prozent inklusive der Wirkungsgradverluste von Generator, Umrichter und Stromspeicherladesystem. Besonders schlecht wäre der Wirkungsgrad, wenn der Stromspeicher bei niedrigen Lasten der Verbrennungskraftmaschine geladen wird.

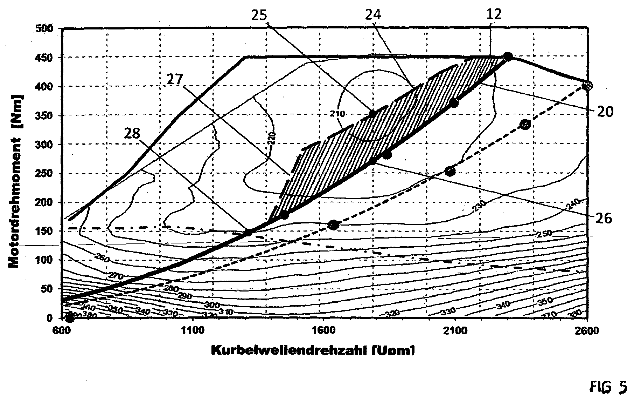

In **Fig. 5** ist dargestellt, wie der Stromspeicher mit besonders hohem Wirkungsgrad geladen wird, der Strom also besonders "billig" ist. Durch die in der Drehzahl gedrückten Betriebspunkte wird die Verbrennungskraftmaschine 1 bereits in Bereichen mit niederem spezifischen Verbrauches betrieben, siehe Kennlinie 20. Aber von der Ortskurve minimalen spezifischen Verbrauches 24 (über der Drehzahl) ist er noch entfernt. In die Ortskurve gelangt die Verbrennungskraftmaschine durch Erhöhung der Last, indem sie den Generator treibt und so Strom erzeugt.

Als Beispiel im Kennfeld: Bei 1800 Umdrehungen (rpm) beträgt das vom Antriebsstrang 5 aufgenommene Drehmoment im Betriebspunkt 26 auf der Kennlinie 20 des Antriebsstranges 275 Nm (Newtonmeter), der Betriebspunkt 25 minimalen Verbrauches liegt bei rund 350 Nm, also um 75 Nm darüber. Damit die Verbrennungskraftmaschine diesen Punkt erreicht, wird die generatorisch betriebene elektrische Maschine so angesteuert dass sie diese 75 Nm zur Erzeugung elektrischen Stromes nutzt. Dem entspricht eine Ladestromstärke, die bedingt durch die elektrischen Eigenschaften der Maschine und des Stromspeichers Grenzen beziehungsweise ein Optimum hat. Diese maximale beziehungsweise optimale Ladestromstärke geht in die Auslegung des Antriebsstranges ein.

Dadurch, dass die erfindungsgemäße Propellerkennlinie 20 der Ortskurve 24 näher ist als eine Propellerkennlinie 16 nach dem Stand der Technik ist, ist die zum Erreichen der Ortskurve 24 nötige Momentenaufnahme des Generators begrenzt. Sie ist wesentlich geringer, als sie es bei einer Propellerkennlinie 16 wäre. Das Erreichen des jeweiligen Punktes minimalen spezifischen Verbrauchs würde einen riesigen Motor/Generator erfordern.

Im Kennfeld in **Fig. 5** ist der Bereich, in dem zusätzlich zum Antrieb Strom erzeugt wird, schraffiert und eingegrenzt durch die Kennlinie des Antriebsstranges 20, durch die Ortskurve minimalen Verbrauches 24, durch ein kleines Stück 12' der Volllastkurve 12 und einen zur Kennlinie 20 hin steil abfallenden Ast 27. Dieser trifft die Kennlinie 20 etwas über dem Punkt 28, bei dem die Volllastkurve 17 des Elektromotors die Kennlinie 20 des Antriebsstranges schneidet. Bis zu diesem Punkt ist rein elektrischer Antrieb möglich.

Die zusätzliche Ladeleistung (höheres Drehmoment bei gleicher Drehzahl) bewirkt eine Wirkungsgradsteigerung der Verbrennungskraftmaschine, die dem Gesamtwirkungsgrad des Antriebs direkt und indirekt zugute kommt. Direkt, weil die Verbrennungskraftmaschine im Betriebspunkt maximalen Wirkungsgrades läuft und indirekt, weil in den Wirkungsgrad der treibenden elektrischen Maschine ja auch der Wirkungsgrad der Stromerzeugung, und damit der der Verbrennungskraftmaschine, eingeht. Die Stromerzeugung erfolgt erfindungsgemäß ja im Betriebpunkt maximalen Wirkungsgrades der Verbrennungskraftmaschine. Mit dem so erzeugten billigen Strom wird es aber auch wirtschaftlich, die elektrische Maschine motorisch zur Unterstützung der Verbrennungskraftmaschine auch in anderen Betriebsbereichen heranzuziehen.

Ein Nebeneffekt des Ladens des Stromerspeichers auch bei hoher Last ist eine größere Freiheit bei der Dimensionierung der Maschinen und des Stromspeichers. So kann etwa bei gleicher Kapazität des Stromspeichers die Verbrennungskraftmaschine kleiner und die elektrische Maschine größer dimensioniert sein. So können die Nennleistungen von Verbrennungskraftmaschine und elektrischer Maschine in einem Bereich von 1:3 bis 1:10, vorzugsweise 1:4 bis 1:6, liegen.

Weiters werden dadurch auch die Emissionen in mehrfacher Hinsicht reduziert: Mit dem geringeren Verbrauch nimmt Abgasmenge ab. Höherer Wirkungsgrad bedeutet auch vollständiger Verbrennung, sodass der Gehalt an CO, HC und Partikeln dramatisch reduziert wird. Die Reduktion kommt nicht zuletzt auch aus der Reduktion der Motorlaufzeit. Wird der Elektromotor als Beispiel im unteren Lastbereich herkömmlich 500h betrieben, kann die dafür benötigte Energie im oberen Lastbereich in wesentlich kürzerer Zeit erzeugt und gespeichert werden. Der Absolutwert der Reduktion hängt wie bereits oben erwähnt vom Lastkollektiv (Anteil im niedrigen Lastbereich), vom jeweiligen Motorkennfeld und vom Ladesystem des Stromspeichers ab. Auch die Wartungsintervalle und die Lebensdauer der Verbrennungskraftmaschine werden so verlängert.

## Patentansprüche

1. Verfahren zum Steuern der hybriden Antriebsanlage eines Wasserfahrzeuges, welche Anlage aus einer Verbrennungskraftmaschine (1), mindestens einer elektrischen Maschine (2) für den motorischen und für den generatorischen Betrieb, einem Antriebsstrang (5) mit einer Schiffsschraube (7), einem Stromspeicher (3) und einer Steuereinheit (8) besteht, wobei zwischen der Verbrennungskraftmaschine (1) und der mindestens einen elektrischen Maschine (2) eine Kupplung (4) vorgesehen ist, **dadurch gekennzeichnet, dass** bei der Fahrt im oberen Leistungsbereich durch Ansteuern des Generators die gemeinsame Leistungsaufnahme der Schiffsschraube (7) und des Generators so eingestellt wird, dass der Betriebspunkt der Verbrennungskraftmaschine (1) in deren Drehmoment/Drehzahl Kennfeld mit dem der jeweiligen Drehzahl entsprechenden Punkt minimalen spezifischen Verbrauches zusammenfällt und dass der so mit hohem Wirkungsgrad erzeugte Strom für den motorischen Betrieb der elektrischen Maschine in anderen Leistungsbereichen zur Verfügung steht.

2. Verfahren nach Anspruch 1, **dadurch gekennzeichnet, dass** bei der Fahrt im unteren Leistungsbereich die Kupplung (4) gelöst ist und nur die elektrische Maschine antreibt, und dass bei der Fahrt im mittleren Leistungsbereich die elektrische Maschine die Verbrennungskraftmaschine beim Beschleunigen unterstützt.

3. Verfahren nach Anspruch 1, **dadurch gekennzeichnet, dass** die elektrische Maschine die Verbrennungskraftmaschine im Bereich höchster Leistung unterstützt ("Boost")

4. Verfahren nach Anspruch 1, wobei in der Steuereinheit die Kennlinie des Antriebsstranges (5) und das Verbrauchskennfeld der Verbrennungskraftmaschine (1) gespeichert sind, **dadurch gekennzeichnet, dass** das von der elektrischen Maschine (2) aufgenommene Drehmoment so eingestellt wird, dass der Betriebspunkt (z.B. 25) der Verbrennungskraftmaschine bei der jeweiligen Drehzahl über dem Betriebspunkt des Antriebsstranges (z.B. 26) im Kennfeld der Verbrennungskraftmaschine mit dem Punkt minimalem spezifischen Kraftstoffverbrauches zusammenfällt.

5. Verfahren nach Anspruch 4, **dadurch gekennzeichnet, dass** das von der elektrischen Maschine aufgenommene Drehmoment beziehungsweise die von der elektrischen Maschine aufgenommene Leistung beschränkt wird.

6. Hybride Antriebsanlage eines Wasserfahrzeuges, welche Anlage aus einer Verbrennungskraftmaschine (1), mindestens einer elektrischen Maschine (2) für den motorischen und für den generatorischen Betrieb, einem Antriebsstrang (5) mit einer Schiffsschraube (7), einem Stromspeicher (3) und einer Steuereinheit (8) besteht, **dadurch gekennzeichnet, dass** der Antriebsstrang so ausgelegt ist, dass seine Drehmoment / Drehzahl Kennlinie (20) maximal um eine definierte Ladeleistung unter den Punkten minimalen spezifischen Brennstoffverbrauches (z.B. 25) liegt.

7. Antriebsanlage eines Wasserfahrzeuges nach Anspruch 6, **dadurch gekennzeichnet, dass** sie so ausgelegt ist, dass die Propellerkennlinie (20) im Drehmoment / Drehzahl Kennfeld der Verbrennungskraftmaschine steiler als eine zum Nennleistungspunkt (15) führende Propellerkennlinie (16) verläuft und so den Punkten geringsten spezifischen Kraftstoffverbrauches (z.B. 25) der Verbrennungskraftmaschine (1) näher liegt.

8. Antriebsanlage nach Anspruch 7, **dadurch gekennzeichnet, dass** die Propellerkennlinie (20) die Volllastkurve (12) der Verbrennungskraftmaschine (1) in einem Punkt (21) schneidet, der im Schnittpunkt der Vollastkurve (12) mit der Nennleistungshyperbel (14) oder bei tieferen Drehzahlen liegt.

9. Antriebsanlage eines Wasserfahrzeuges nach Anspruch 6,
**dadurch gekennzeichnet, dass** die steilere Kennlinie (20) der Schiffsschraube (7) durch deren Ausführung mit vergrößertem Durchmesser erreicht wird.

10. Antriebsanlage eines Wasserfahrzeuges nach Anspruch 6,
**dadurch gekennzeichnet, dass** die steilere Kennlinie (20) der Schiffsschraube (7) durch eine vergrößerte Steigung deren Schraubenblätter erreicht wird.

11. Antriebsanlage eines Wasserfahrzeuges nach Anspruch 6,
**dadurch gekennzeichnet, dass** sich die Leistungsaufnahme beziehungsweise Leistungsabgabe der motorisch betriebenen elektrischen Maschine (3) zur Leistung der Verbrennungskraftmaschine (1) wie 1:3 bis 1:8, vorzugsweise wie 1:4 bis 1:6 verhält.

12. Antriebsanlage eines Wasserfahrzeuges nach Anspruch 6, **dadurch gekennzeichnet, dass** die motorisch betriebene elektrischen Maschine (2) im unteren Drehzahlbereich des Antriebsstranges ein hohes Drehmoment aufweist, das erst abfällt, wenn im Kennfeld die Kennlinie (17) der elektrischen Maschine (2) die Kennlinie (20) des Antriebsstranges schneidet.

13. Antriebsanlage eines Wasserfahrzeuges nach Anspruch 12
**dadurch gekennzeichnet, dass** das hohe Drehmoment der motorisch betriebenen elektrischen Maschine (2) durch ein mit dieser zusammenwirkendes Untersetzungsgetriebe (10) erreicht wird

## Claims

1. Process for controlling a hybrid propulsion system for a watercraft, the system comprising a combustion engine (1), at least one electric machine (2) for operating as a generator and as a motor, a drive train (5) with a propeller (7), a battery (3) and a control unit (8), a clutch (4) being provided between the combustion engine (1) and the electric machine(2), **characterized in that** during travel in the upper region of power the joint load of the propeller (7) and the generator (2) is adjusted by controlling the generator (2) in such way that the point of operation of the combustion engine in its characteristic torque/speed-graph is brought into its point of minimum specific fuel consumption, and **in that** the current so generated with high efficiency is available for the operation of the electric machine as a motor in other regions of power.

2. Process according to claim 1, **characterized in that** during travel in the lower region of power the clutch (4) is released and the electric machine is operated alone, and that during travel in the medium region of power the electric machine (2) assists the combustion engine (1) during acceleration.

3. Process according to claim 1, **characterized in that** the electric machine assists the combustion engine in the region of highest power ("Boost").

4. Process according to claim 1, wherein the characteristic curve of the drive train (5) and the characteristic graph of specific fuel consumption of the combustion engine (1) are stored in the control unit, **characterized in that** the torque consumed by the electric machine (2) is controlled so that the operating point (e.g. 25) of the combustion engine at the prevailing rotational speed is above the operating point of the drive train (e.g. 26) in the characteristic graph of the combustion engine and coincides with the point of minimum specific fuel consumption.

5. Process according to claim 4, **characterized in that** the torque or the power consumed by the electric machine is limited.

6. Hybrid propulsion system of a watercraft, comprising a combustion engine (1), at least one electric machine (2) for being operated as a motor and as a generator, a drive train (5) with a propeller (7), a battery (3) and a control unit (8), **characterized in that** the drive train (5) is laid out in such a way that the characteristic torque/speed - curve (20) proceeds below the points of minimum specific fuel consumption (z.B. 25) by a distance corresponding to a given maximum charging power.

7. Hybrid propulsion system of a watercraft according to claim 6, **characterized in that** its layout is such that the characteristic curve (20) of the propeller (7) in the characteristic torque/speed - graph of the combustion engine is steeper than a propeller characteristic curve (16) leading to the point of rated power (15), so that it is nearer the points of minimum specific fuel consumption (z.B. 25) of the combustion engine (1).

8. Propulsion system according to claim 7, **characterized in that** the propeller characteristic curve (20) intersects the he full load curve (12) of the combustion engine (1) in a point (21), which is situated in the point of intersection of the full load curve (12) with the rated power hyperbola (14), or at a lower rotational speed.

9. Propulsion system of a naval vessel according to claim 6, **characterized in that** the steeper characteristic curve (20) of the propeller (7) is achieved by increasing its diameter.

10. Propulsion system of a naval vessel according to claim 6, **characterized in that** the steeper characteristic curve (20) of the propeller (7) is achieved by increasing the pitch of its blades.

11. Propulsion system of a naval vessel according to claim 6, **characterized in that** the ratio between power consumption or power output of the electric machine (3) and the power of the combustion engine (1) is 1:3 to 1:8, preferably 1:4 to 1:6.

12. Propulsion system of a naval vessel according to claim 6, **characterized in that** the electric machine (2) operated as a motor presents a high torque in the lower region of rotating speed of the drive train, which does not decrease until the characteristic curve (17) of the electric machine (2) intersects the characteristic curve (20) of the drive train.

13. Propulsion system of a naval vessel according to claim 12, **characterized in that** the high torque of the electric machine (2) operated as a motor is achieved by a reduction gearbox (10) joined to the electric machine (2).

## Revendications

1. Procédé de commande d'un système de propulsion hybride d'un navire, comprenant un moteur à combustion (1), au moins une machine éléctrique (2) apte de fonctionner en tant que moteur aussi qu'en tant que générateur, un train d'entrainement (5) avec une hélice (7), un accumulateur de courant (3) et un dispositif de commande (8), un embrayage (4) étant prévu entre le moteur à combustion (1) et la au moins une machine éléctrique (2), **caractérisé en ce que** en marche dans la gamme supérieure de puissance, la puissance cedée à l'ensemble de l'hélice (7) et du générateur (2) est ajustée par commande du générateur de façon à ce que le point de fonctionnement de la machine à combustion dans son champs caractéristique couple/nombre de tours coincide avec le point de consommation spécifique minimale correspondant au nombre de tours actuel, et **en ce que** le courant éléctrique ainsi généré à haut rendement est à la disposition de la machine éléctrique fonctionnant en tant que moteur dans des autres gammes de puissance.

2. Procédé selon la revendication 1, **caractérisé en ce que** en marche dans la gamme inférieure de puissance, l'embrayage (4) est dégagée et la machine éléctrique (2) seule entraine le navire, et **en ce que** en marche dans la gamme moyenne de puissance la machine éléctrique assiste à l'accéleration du moteur à combustion.

3. Procédé selon la revendication 1, **caractérisé en ce que** dans la gamme la plus supèrieure de puissance, la machine éléctrique (2) assiste le moteur à combustion ("Boost").

4. Procédé selon la revendication 1, la courbe caractéristique du train d'entrainement (5) et le champs caractéristique de consommation spécifique du moteur à combustion étant mémorisés dans le dispositif de commande, **caractérisé en ce que** le couple absorbé par la machine éléctrique (2) est ajusté de façon à ce que le point de fonctionnement du moteur à combustion (par exemple 25) au nombre de tours actuel est situé au-dessus du point de fonctionnement du train d'entrainement (par exemple 26) et coincide aved le point de consommation spécifique minimale dans le champs caractéristique du moteur à combustion.

5. Procédé selon la revendication 1, **caractérisé en ce que** la puisance oubien le couple cedée à la machine éléctrique est limité.

6. Système de propulsion hybride d'un navire, comprenant un moteur à combustion (1), au moins une machine éléctrique (2) apte de fonctionner en tant que moteur aussi qu'en tant que générateur, un train d'entrainement (5) avec une hélice (7), un accumulateur de courant (3) et un dispositif de commande (8), **caractérisé en ce que** le train d'entrainement (5) est conçu de façon à ce que la courbe caractéristique couple/nombre de tours (20) du train d'entrainement (5) est située en-dessous des points de consommation spécifique minimale (par exemple 25),(1) au maximum par une puissance de chargement definie.

7. Système de propulsion hybride d'un navire selon la revendication 6, **caractérisé en ce qu'**il est conçu de façon à ce que la courbe caractéristique couple/nombre de tours (20) de l'hélice dans le champ caractéristique du moteur à combustion est plus ardue que une courbe caractéristique d'hélice (16) dirigée vers le point de puissance nominale (15), et ainsi est plus proche des points de consommation spécifique minimum du moteur à combustion.

8. Système de propulsion hybride d'un navire selon la revendication 7, **caractérisé en ce que** la courbe caractéristique (20) de l'hélice bissecte la courbe de pleine charge (12) du moteur à combustion (1) dans un point (21) coincidant avec le point de bissection de la courbe de pleine charge (12) avec l'hyperbole de puissance nominale (14) ou est situé a un nombre de tours inférieur.

9. Système de propulsion hybride d'un navire selon la revendication 6, **caractérisé en ce que** la courbe caracteristique (20) de l'hélice (7) plus ardue est réalisée par augmentation de son diamètre.

10. Système de propulsion hybride d'un navire selon la revendication 6, **caractérisé en ce que** la courbe caracteristique (20) de l'hélice (7) plus ardue est réalisée par augmentation de l'angle d'inclinaison de l'aubage.

11. Système de propulsion hybride d'un navire selon la revendication 6, **caractérisé en ce que** la relation entre la puissance absorbée oubien cedée par la machine éléctrique (3) et la puissance du moteur à combustion (1) est de 1:3 à 1:8, de préférence de 1:4 à 1:6.

12. Système de propulsion hybride d'un navire selon la revendication 6, **caractérisé en ce que** la machine éléctrique (2) opérant comme moteur cède un couple important dans la gamme inférieure de nombre de tours, couple qui ne déscend que quand dans le champs caracréristique la courbe caractéristique de la machine éléctrique (17) bissecte la courbe caractéristique (20) du train d'entrainement.

13. Système de propulsion hybride d'un navire selon la revendication 12, **caractérisé en ce que** le couple élevé de la machine éléctrique (2) est réalisé par moyen d'une transmission de démultiplication.
